# DEMANDE DE BREVET EUROPEEN

(11) **EP 3 318 747 A1**
(43) Date de publication de la demande: **09.05.2018**
(21) Numéro de dépôt: 17191678.6
(22) Date de dépôt: 18.09.2017
(51) Int. Cl.: F02N 11/00, B60W 10/06, B60W 20/50, B60W 10/08

(54) **PROCÉDÉ DE DÉMARRAGE D'UN MOTEUR THERMIQUE D'UN GROUPE MOTOPROPULSEUR D'UN VÉHICULE, NOTAMMENT AUTOMOBILE**

(30) Priorité: 18.10.2016 FR 1660075
(71) Demandeur: PSA Automobiles SA, 78300 Poissy (FR)
(72) Inventeur: MARCHYLLIE, Alexis, 33160 St Medard en Jalles (FR); SERDJANIAN, Gregor, 75020 Paris (FR)

(57) **Abrégé**

L'invention concerne un procédé de démarrage d'un moteur thermique d'un groupe motopropulseur d'un véhicule, notamment automobile.

Selon l'invention, le procédé comprend une étape d'exécution d'une tentative de démarrage du moteur thermique (1) par un organe de démarrage (2, 3) sélectionné, la tentative de démarrage étant effectuée, lorsque l'organe de démarrage sélectionné (2, 3) est un premier organe de démarrage (2), après l'écoulement d'un délai dépendant d'un critère de défaillance de démarrage détecté.

L'invention trouve son application dans le domaine de l'industrie automobile.

## Description

L'invention concerne un procédé de démarrage d'un moteur thermique d'un groupe motopropulseur d'un véhicule, notamment automobile.

De manière connue en soi, les véhicules automobiles hybrides, c'est-à-dire pourvus d'un groupe motopropulseur comprenant un moteur thermique et un moteur électrique, sont en mesure d'être propulsés uniquement par le moteur électrique dans certaines conditions. Cela limite l'utilisation du moteur thermique et permet de limiter la pollution.

Le moteur électrique a néanmoins une autonomie limitée, et le déplacement du véhicule en tout électrique présente donc un rayon d'action limité. Pour pallier cet inconvénient, le moteur thermique est régulièrement démarré par un organe de démarrage, généralement un alterno-démarreur, notamment pour recharger le système électrique ou répondre à un besoin de couple supplémentaire. L'alterno-démarreur est un dispositif bien connu de l'homme du métier, et cumule les fonctions d'alternateur et de démarreur du moteur thermique.

Il arrive cependant qu'un échec de démarrage par l'alterno-démarreur intervienne lors d'une première tentative. Le document FR 3006384 propose, pour pallier cet inconvénient, un procédé de démarrage d'un moteur thermique au cours duquel différents organes de démarrage d'un groupe d'organes de démarrage sont testés successivement. La détermination du groupe d'organes de démarrage et le nombre de tentatives de démarrage dépendent de la vitesse du véhicule au moment de la première tentative de démarrage.

Cependant, le procédé divulgué dans le document FR 3006384 se contente de déterminer un ensemble d'organes de démarrage, et le choix de l'organe devant réaliser le démarrage du moteur thermique est réalisé arbitrairement. Cela présente un inconvénient si l'organe sélectionné n'est pas le plus adapté au démarrage. D'autre part, certaines situations de vie ne sont pas couvertes par le procédé de ce document.

La présente invention a pour but de pallier les inconvénients ci-dessus de l'art antérieur.

Pour atteindre ce but, l'invention concerne un procédé de démarrage d'un moteur thermique d'un groupe motopropulseur d'un véhicule, notamment automobile, comprenant une chaîne de traction comportant des premier et deuxième organes de démarrage du moteur thermique, le procédé étant mis en oeuvre par des moyens de gestion de la chaîne de traction et comprenant :
- Une étape de réception d'une notification de démarrage du moteur thermique par le premier organe de démarrage ;
- Une étape de détection d'une défaillance de démarrage réalisée par le premier organe de démarrage du moteur thermique selon un parmi un ensemble de critères de défaillance de démarrage prédéterminés ;
- Une étape de mesure de la vitesse et le cas échéant de l'accélération du véhicule ;
- Une étape de sélection de l'organe de démarrage parmi le premier et le deuxième organe de démarrage en fonction de la vitesse et le cas échéant de l'accélération du véhicule mesurées à l'étape précédente ;
- Une étape d'exécution d'une tentative de démarrage du moteur thermique par l'organe de démarrage sélectionné à l'étape précédente, la tentative de démarrage étant effectuée, lorsque l'organe de démarrage sélectionné est le premier organe de démarrage, après l'écoulement d'un délai dépendant du critère de défaillance de démarrage détecté.

Selon une autre particularité, l'ensemble de critères de défaillance comprend un premier critère de défaillance dépendant d'une donnée de température interne ou externe au véhicule, et un second critère de défaillance dépendant de la valeur du régime du moteur thermique atteint après un temps déterminé suivant à un premier démarrage infructueux.

Selon une autre particularité, lorsque la vitesse du véhicule mesurée est nulle, les moyens de gestion de la chaîne de traction choisissent un troisième organe de démarrage qui comprend le moteur électrique du groupe motopropulseur et une boite de vitesses automatique du groupe motopropulseur dont un arbre d'entrée est relié à un arbre de sortie du moteur électrique, et, lors de l'étape d'exécution d'une tentative de démarrage du moteur thermique, les moyens de gestion de la chaîne de traction :
- Mettent la boite de vitesses au neutre et ferment un embrayage du groupe motopropulseur constituant le deuxième organe de démarrage ;
- Activent le moteur électrique de sorte que son arbre d'entrée soit mis en rotation pour entrainer, par l'intermédiaire de l'embrayage fermé, l'arbre de sortie du moteur thermique provoquant le démarrage de ce dernier.

Selon une autre particularité, l'organe de démarrage choisi, lorsque la vitesse du véhicule est supérieure à une première valeur déterminée, est l'embrayage du groupe motopropulseur et, lors de l'étape d'exécution d'une tentative de démarrage du moteur thermique, les moyens de gestion de la chaîne de traction commandent le passage d'un rapport de vitesse au niveau de la boite de vitesses et ferment l'embrayage du groupe motopropulseur de sorte que le couple transmis par les roues du véhicule en mouvement par l'intermédiaire de la boite de vitesse et de l'embrayage à l'arbre de sortie du moteur thermique induise la mise en rotation de cet arbre de sortie provoquant le démarrage du moteur thermique.

Selon une autre particularité, l'organe de démarrage choisi, lorsque la vitesse du véhicule est inférieure à une seconde valeur déterminée, elle-même inférieure à la première valeur de vitesse, est un alterno-démarreur du groupe motopropulseur constituant le premier et, lors de l'étape d'exécution d'une tentative de démarrage du moteur thermique, les moyens de gestion de la chaîne de traction commandent l'activation de l'alterno-démarreur de sorte qu'il entraine l'arbre d'entrée du moteur thermique par l'intermédiaire de la courroie provoquant le démarrage du moteur thermique.

Selon une autre particularité, lorsque la valeur de la vitesse du véhicule mesurée est comprise entre les première et seconde valeurs déterminées, l'organe de démarrage choisi est :
- L'alterno-démarreur si la vitesse du véhicule est préalablement passée au-dessus de la seconde vitesse déterminée V_{LO} ;
- L'embrayage si la vitesse du véhicule est préalablement passée sous la première vitesse déterminée V_{HI}.

Selon une autre particularité, lorsque l'alterno-démarreur est choisi et que la défaillance a été détectée selon le premier critère de défaillance, l'étape d'exécution d'au moins une autre tentative de démarrage est effectuée dès que la défaillance n'est plus détectée.

Selon une autre particularité, lorsque l'alterno-démarreur est choisi et que la défaillance a été détectée selon le second critère de défaillance, l'étape d'exécution d'au moins une autre tentative de démarrage est effectuée immédiatement après l'échec de la tentative précédente.

L'invention concerne également un véhicule automobile comprenant un moteur thermique et un moteur électrique, une chaîne de traction et des moyens de gestion de la chaîne de traction destinés à mettre en oeuvre un procédé de démarrage du moteur thermique tel que décrit précédemment.

Selon une autre particularité, les premier et deuxième organes de démarrage du moteur thermique compris dans la chaine de traction sont respectivement un alterno-démarreur relié par l'intermédiaire d'une courroie à un arbre d'entrée du moteur thermique, et un embrayage du groupe motopropulseur relié entre un arbre d'entrée d'un moteur électrique et un arbre de sortie du moteur thermique.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :

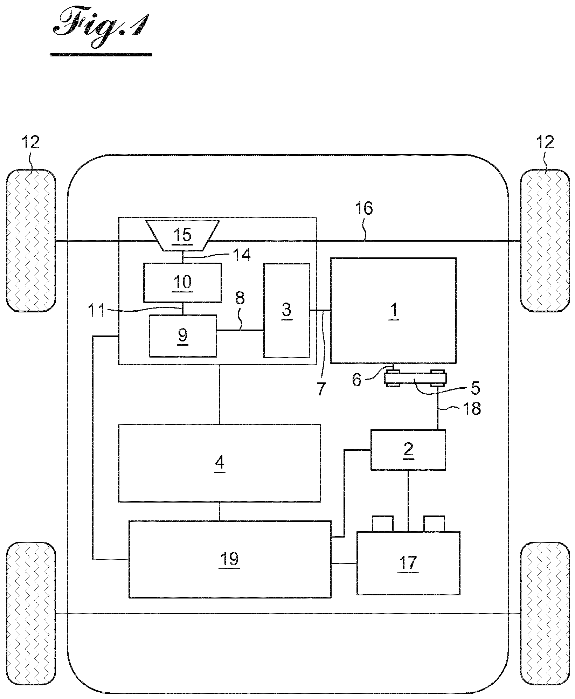

- La figure 1 représente une vue schématique de dessus d'un véhicule et des éléments assurant la mise en oeuvre du procédé de démarrage d'un moteur thermique d'un groupe motopropulseur du véhicule selon l'invention ;

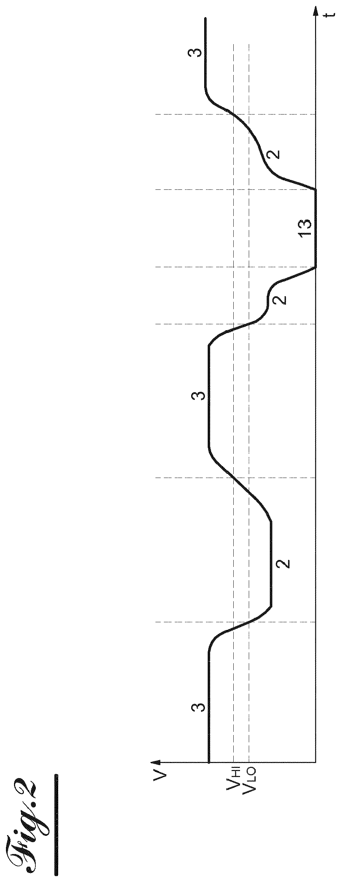

- La figure 2 illustre la mise en oeuvre du procédé de démarrage du moteur thermique selon l'invention en fonction de la vitesse du véhicule.

En référence aux figures, le procédé de démarrage d'un moteur thermique 1 d'un groupe motopropulseur d'un véhicule automobile va maintenant être décrit, et plus particulièrement d'un groupe motopropulseur hybride comprenant également un moteur électrique 9 et dont le moteur thermique 1 est susceptible de s'arrêter notamment pendant les périodes de roulage du véhicule.

Le groupe motopropulseur du véhicule comprend une boite de vitesses automatique 10 dont l'arbre de sortie 14 est relié à un différentiel 15 assurant l'entraînement d'un train 16 de roues motrices 12 du véhicule. La boite de vitesses 10 comprend en outre un arbre d'entrée 11 relié à un arbre de sortie (non représenté) du moteur électrique 9 du groupe motopropulseur, l'arbre d'entrée 8 du moteur électrique 9 étant en outre relié à un arbre de sortie 7 du moteur thermique 1 par l'intermédiaire d'un embrayage 3 du groupe motopropulseur.

Le groupe motopropulseur comprend en outre un alterno-démarreur 2 alimenté par une batterie 17 du véhicule. Cet alterno-démarreur 2 comprend un arbre 18 relié à un arbre d'entrée 6 du moteur thermique 1 par l'intermédiaire d'une courroie 5 ou de tout autre moyen d'entraînement adapté.

L'alterno-démarreur 2 présente la double fonction d'alternateur et de démarreur. En mode alternateur, lorsque le moteur thermique 1 est allumé, l'arbre d'entrée 6 du moteur thermique 1 entraîne l'arbre 18 de l'alterno-démarreur 2, ce dernier produisant alors de l'électricité pour recharger la batterie 17. En mode démarreur, lorsque le moteur thermique 1 est arrêté, la batterie 17 fournit de l'énergie électrique à l'alterno-démarreur 2 pour mettre l'arbre 18 de ce dernier en rotation. L'arbre 18 en rotation de l'alterno-démarreur 2 entraîne ainsi l'arbre d'entrée 6 du moteur thermique 1 par l'intermédiaire de la courroie 5, ce qui provoque le démarrage du moteur thermique 1.

L'alterno-démarreur 2 est donc le premier organe de démarrage du moteur thermique 1 du véhicule. Comme on le verra ultérieurement, l'embrayage 3 du groupe motopropulseur constitue le deuxième organe de démarrage du moteur thermique 1 du véhicule, et le moteur électrique 9 ainsi que la boîte de vitesses automatique 10 constituent le troisième organe de démarrage.

L'ensemble formé par le groupe motopropulseur, la batterie 17, le différentiel 15 et le train 16 de roues motrices 12 forme la chaîne de traction du véhicule. En outre, le véhicule comprend des moyens de gestion 4 de la chaîne de traction comprenant par exemple un calculateur et une mémoire. Le véhicule comprend également des moyens de contrôle 19 du système électrique du véhicule et du groupe motopropulseur.

Les différentes étapes du procédé de l'invention sont mises en oeuvre par les moyens de gestion 4 de la chaîne de traction.

La première étape du procédé de démarrage du moteur thermique 1 est la réception d'une notification de démarrage du moteur thermique 1 réalisé par l'alterno-démarreur 2. Cette notification est un signal provenant de moyens de détection du véhicule, et est traitée par les moyens de gestion 4 de la chaîne de traction. Il s'ensuit l'envoi, par les moyens de gestion 4, d'une consigne de démarrage du moteur thermique 1 à l'alterno-démarreur 2.

Au cours de la deuxième étape du procédé, les moyens de gestion 4 détectent une défaillance de démarrage du moteur thermique 1 selon un critère de défaillance parmi deux critères de défaillance de démarrage prédéterminés et enregistrés dans la mémoire des moyens de gestion 4 de la chaîne de traction.

Le premier critère de défaillance est dépendant d'une donnée de température interne ou externe au véhicule. Les moyens de gestion 4 considèrent qu'il existe ce premier critère de défaillance lorsque la donnée de température mesurée par les moyens de détection du véhicule est inférieure à une valeur seuil enregistrée dans la mémoire des moyens de gestion. Préférentiellement, la donnée de température est mesurée au niveau du moteur 1 ou de la courroie d'entraînement 5.

Le second critère de défaillance dépend de la valeur du régime du moteur thermique 1 atteint par ce dernier après un temps déterminé. Plus précisément, Les moyens de gestion 4 considèrent qu'il existe ce second critère de défaillance si le régime du moteur thermique 1 atteint au bout de ce temps déterminé suivant la consigne de démarrage du moteur thermique 1 émise par les moyens de gestion 4 est inférieur à une valeur seuil enregistrée dans la mémoire des moyens de gestion.

Au cours de la troisième étape, les moyens de détection mesurent la vitesse instantanée du véhicule.

Au cours de la quatrième étape, les moyens de gestion 4 choisissent l'organe de démarrage 2, 3, 13 adapté à une autre tentative de démarrage du véhicule. Ce choix dépend dans un premier temps de la vitesse du véhicule mesurée, et le cas échéant de l'accélération du véhicule.

Si la vitesse mesurée est nulle, les moyens de gestion 4 mettent la boite de vitesses 10 au neutre et ferment l'embrayage 3 du groupe motopropulseur. Puis, au cours de la dernière étape du procédé, les moyens de gestion 4 activent le moteur électrique 9 de sorte que son arbre d'entrée 8 soit mis en rotation pour entraîner, par l'intermédiaire de l'embrayage 3 fermé, l'arbre de sortie 7 du moteur thermique 1. L'entraînement en rotation de l'arbre de sortie 7 du moteur thermique 1 va alors provoquer le démarrage de ce dernier.

Si la vitesse mesurée est supérieure à la première valeur de vitesse V_{HI}, par exemple douze kilomètres par heure, l'organe de démarrage choisi par les moyens de gestion est l'embrayage 3. Puis, au cours de la dernière étape du procédé, les moyens de gestion 4 de la chaîne de traction commandent le passage d'un rapport de vitesse au niveau de la boite de vitesses 10 et ferment l'embrayage 3 du groupe motopropulseur. Le véhicule étant en mouvement, un couple est transmis par les roues motrices 12 du véhicule par l'intermédiaire de la boite de vitesses 10 et de l'embrayage 3 à l'arbre de sortie 7 du moteur thermique 1. Ce couple met alors l'arbre de sortie 7 du moteur thermique 1 en rotation, ce qui provoque le démarrage du moteur thermique 1.

Si la vitesse mesurée est inférieure à la seconde valeur de vitesse V_{LO}, par exemple huit kilomètres par heure, l'organe de démarrage choisi par les moyens de gestion est l'alterno-démarreur 2. Puis, au cours de la dernière étape du procédé, les moyens de gestion 4 de la chaîne de traction commandent l'activation de l'alterno-démarreur 2 après un l'écoulement d'un délai dépendant du critère de défaillance détecté. A l'issue de ce délai, l'activation de l'alterno-démarreur 2 entraîne l'arbre d'entrée 6 du moteur thermique 1 par l'intermédiaire de la courroie 5, ce qui provoque le démarrage du moteur thermique 1.

Si le critère détecté est le premier critère, alors l'alterno-démarreur 2 sera activé suite à la levée de ce premier critère de référence, c'est-à-dire quand la température mesurée sera au-dessus de la donnée seuil de température enregistrée en mémoire des moyens de gestion 4. Si le critère détecté est le second critère de défaillance, alors l'activation de l'alterno-démarreur 2 est réalisée presque immédiatement à la suite de l'échec de la première tentative de démarrage, typiquement autour d'une demi-seconde suivant l'échec de la première tentative.

Enfin, si la valeur de la vitesse du véhicule mesurée est comprise entre les première V_{HI} et seconde V_{LO} valeurs de vitesse déterminées, le choix de l'organe de démarrage 2, 3 par les moyens de gestion 4 de la chaîne de traction dépend du comportement du véhicule.

Si la vitesse du véhicule a augmenté pour atteindre la valeur comprise entre V_{LO} et V_{HI}, c'est-à-dire que la vitesse du véhicule est passée au-dessus du seuil V_{LO}, alors l'alterno-démarreur 2 est choisi. Comme décrit ci-dessus, au cours de la dernière étape du procédé, les moyens de gestion 4 de la chaîne de traction commandent l'activation de l'alterno-démarreur 2 après l'écoulement d'un délai dépendant du critère de défaillance détecté. A l'issue de ce délai, l'activation de l'alterno-démarreur 2 entraîne l'arbre d'entrée 6 du moteur thermique 1 par l'intermédiaire de la courroie 5, ce qui provoque le démarrage du moteur thermique 1.

Si la vitesse du véhicule a diminué pour atteindre la valeur comprise entre V_{LO} et V_{HI}, c'est-à-dire que la vitesse du véhicule est passée sous le seuil V_{HI}, alors l'embrayage 3 est choisi comme organe de démarrage. Comme décrit ci-dessus, au cours de la dernière étape du procédé, les moyens de gestion 4 de la chaîne de traction commandent le passage d'un rapport de vitesse au niveau de la boite de vitesses 10 et ferment l'embrayage 3 du groupe motopropulseur. Le véhicule étant en mouvement, un couple est transmis par les roues motrices 12 du véhicule par l'intermédiaire de la boite de vitesses 10 et de l'embrayage 3 à l'arbre de sortie 7 du moteur thermique 1. Ce couple met alors l'arbre de sortie 7 du moteur thermique 1 en rotation, ce qui provoque le démarrage du moteur thermique 1.

Ce choix de l'organe de démarrage 2 ou 3 dépendant de l'accélération, lorsque la vitesse du véhicule est comprise entre les première V_{HI} et seconde V_{LO} valeurs de vitesse déterminées, permet d'éviter qu'un démarrage par l'embrayage 3, lorsque la vitesse est initialement supérieure à la première vitesse déterminée V_{HI}, ne soit interrompu si la vitesse du véhicule diminue et devient inférieure à cette première vitesse déterminée V_{HI} avant la fin du démarrage par l'embrayage 3. En outre, les valeurs des première V_{HI} et seconde V_{LO} vitesses déterminées sont choisies de sorte que, si un démarrage par l'embrayage 3 est initié à une vitesse égale à la première vitesse déterminée V_{HI}, ce démarrage sera terminé lorsque la vitesse du véhicule atteindra la valeur de la seconde vitesse déterminée V_{LO}.

Le procédé tel que décrit ci-dessus permet non seulement d'exécuter des tentatives de démarrage du moteur thermique 1 en cas d'échec d'une première tentative de démarrage de ce dernier, mais surtout le procédé permet d'analyser la situation ayant conduit à l'échec de ce démarrage à travers la détection d'un critère de défaillance parmi une liste de critères déterminées. Cette analyse de la situation permet aux moyens de gestion 4 de la chaîne de traction de choisir l'organe de démarrage 2, 3, 13 le plus approprié pour effectuer au moins une autre tentative de démarrage du moteur thermique.

La configuration telle que décrite n'est pas limitée au mode de réalisation décrit dans le texte et représenté sur les figures. Elle n'a été donnée qu'à titre d'exemple non limitatif. De multiples modifications peuvent être apportées sans pour autant sortir du cadre de l'invention. Ainsi on pourrait imaginer que, lorsque l'alterno-démarreur 3 est l'organe de démarrage choisi et que c'est le deuxième critère de défaillance qui est détecté, une troisième tentative de démarrage avec cet organe 3 soit exécutée en cas d'échec de la deuxième tentative.

## Revendications

1. Procédé de démarrage d'un moteur thermique (1) d'un groupe motopropulseur d'un véhicule, notamment automobile, comprenant une chaîne de traction comportant des premier (2) et deuxième (3) organes de démarrage du moteur thermique (1), le procédé étant mis en oeuvre par des moyens de gestion (4) de la chaîne de traction et comprenant :
• Une étape de réception d'une notification de démarrage du moteur thermique (1) par le premier organe de démarrage (2) ;
• Une étape de détection d'une défaillance de démarrage réalisée par le premier organe de démarrage (2) du moteur thermique (1) selon un parmi un ensemble de critères de défaillance de démarrage prédéterminés ;
• Une étape de mesure de la vitesse et le cas échéant de l'accélération du véhicule ;
• Une étape de sélection de l'organe de démarrage (2, 3) parmi le premier et le deuxième organe de démarrage en fonction de la vitesse et le cas échéant de l'accélération du véhicule mesurées à l'étape précédente ;
• Une étape d'exécution d'une tentative de démarrage du moteur thermique (1) par l'organe de démarrage (2, 3) sélectionné à l'étape précédente, la tentative de démarrage étant effectuée, lorsque l'organe de démarrage sélectionné (2, 3) est le premier organe de démarrage (2), après l'écoulement d'un délai dépendant du critère de défaillance de démarrage détecté.

2. Procédé de démarrage selon la revendication 1, **caractérisé en ce que** l'ensemble de critères de défaillance comprend un premier critère de défaillance dépendant d'une donnée de température interne ou externe au véhicule, et un second critère de défaillance dépendant de la valeur du régime du moteur thermique (1) atteint après un temps déterminé suivant à un premier démarrage infructueux.

3. Procédé de démarrage selon la revendication 1 ou 2, **caractérisé en ce que**, lorsque la vitesse du véhicule mesurée est nulle, les moyens de gestion (4) de la chaîne de traction choisissent un troisième organe de démarrage (13) qui comprend le moteur électrique (9) du groupe motopropulseur et une boite de vitesses automatique (10) du groupe motopropulseur dont un arbre d'entrée (11) est relié à un arbre de sortie du moteur électrique (9), et **en ce que**, lors de l'étape d'exécution d'une tentative de démarrage du moteur thermique (1), les moyens de gestion (4) de la chaîne de traction :
• Mettent la boite de vitesses (10) au neutre et ferment un embrayage (3) du groupe motopropulseur constituant le deuxième organe de démarrage ;
• Activent le moteur électrique (9) de sorte que son arbre d'entrée (8) soit mis en rotation pour entrainer, par l'intermédiaire de l'embrayage (3) fermé, l'arbre de sortie (7) du moteur thermique (1) provoquant le démarrage de ce dernier.

4. Procédé de démarrage selon la revendication 1 ou 2, **caractérisé en ce que** l'organe de démarrage (2, 3) choisi, lorsque la vitesse du véhicule est supérieure à une première valeur déterminée (V_{HI}), est l'embrayage (3) du groupe motopropulseur et **en ce que**, lors de l'étape d'exécution d'une tentative de démarrage du moteur thermique (1), les moyens de gestion (4) de la chaîne de traction commandent le passage d'un rapport de vitesse au niveau de la boite de vitesses (10) et ferment l'embrayage (3) du groupe motopropulseur de sorte que le couple transmis par les roues (12) du véhicule en mouvement par l'intermédiaire de la boite de vitesses (10) et de l'embrayage (3) à l'arbre de sortie (7) du moteur thermique (1) induise la mise en rotation de cet arbre de sortie (7) provoquant le démarrage du moteur thermique (1).

5. Procédé de démarrage selon la revendication 4, **caractérisé en ce que** l'organe de démarrage (2, 3) choisi, lorsque la vitesse du véhicule est inférieure à une seconde valeur déterminée (V_{LO}), elle-même inférieure à la première valeur de vitesse (V_{HI}), est un alterno-démarreur (2) du groupe motopropulseur constituant le premier organe de démarrage (2) et **en ce que**, lors de l'étape d'exécution d'une tentative de démarrage du moteur thermique (1), les moyens de gestion (4) de la chaîne de traction commandent l'activation de l'alterno-démarreur (2) de sorte qu'il entraine l'arbre d'entrée (6) du moteur thermique (1) par l'intermédiaire de la courroie (5) provoquant le démarrage du moteur thermique (1).

6. Procédé de démarrage selon la revendication 5, **caractérisé en ce que**, lorsque la valeur de la vitesse du véhicule mesurée est comprise entre les première (V_{HI}) et seconde (V_{LO}) valeurs déterminées, l'organe de démarrage choisi est :
• L'alterno-démarreur (2) si la vitesse du véhicule est préalablement passée au-dessus de la seconde vitesse déterminée V_{LO} ;
• L'embrayage (3) si la vitesse du véhicule est préalablement passée sous la première vitesse déterminée V_{HI}.

7. Procédé de démarrage selon l'une quelconque des revendications 2, 5 et 6, **caractérisé en ce que** lorsque l'alterno-démarreur (2) est choisi et que la défaillance a été détectée selon le premier critère de défaillance, l'étape d'exécution d'au moins une autre tentative de démarrage est effectuée dès que la défaillance n'est plus détectée.

8. Procédé de démarrage selon l'une quelconque des revendications 2, 5 et 6, **caractérisé en ce que** lorsque l'alterno-démarreur (2) est choisi et que la défaillance a été détectée selon le second critère de défaillance, l'étape d'exécution d'au moins une autre tentative de démarrage est effectuée immédiatement après l'échec de la tentative précédente.

9. Véhicule automobile comprenant un moteur thermique (1) et un moteur électrique (9), une chaîne de traction et des moyens de gestion (4) de la chaîne de traction destinés à mettre en oeuvre un procédé de démarrage du moteur thermique (1) selon l'une quelconque des revendications 1 à 8.

10. Véhicule selon la revendication 9, **caractérisé en ce que** les premier (2) et deuxième (3) organes de démarrage du moteur thermique (1) compris dans la chaine de traction sont respectivement un alterno-démarreur relié par l'intermédiaire d'une courroie (5) à un arbre d'entrée (6) du moteur thermique (1), et un embrayage du groupe motopropulseur relié entre un arbre d'entrée (8) d'un moteur électrique (9) et un arbre de sortie (7) du moteur thermique (1).
